# EUROPEAN PATENT APPLICATION

(11) **EP 3 702 817 A1**
(43) Date of publication of application: **02.09.2020**
(21) Application number: 18870586.7
(22) Date of filing: 10.10.2018
(51) Int. Cl.: G02B 5/124, B32B 3/26, B32B 7/02

(54) **RETRO-REFLECTIVE SHEET**

(30) Priority: 25.10.2017 JP 2017206504
(71) Applicant: Nippon Carbide Industries Co., Inc., Tokyo 108-8466 (JP)
(72) Inventor: SHIOMI, Toshiaki, Namerikawa-shi Toyama 936-8555 (JP); JIANG, Chenyang, Namerikawa-shi Toyama 936-8555 (JP); TAKAMATSU, Takeo, Namerikawa-shi Toyama 936-8555 (JP)
(74) Representative: Hoffmann Eitle
(86) International application number: PCT/JP2018/037737
(87) International publication number: WO 2019/082656

(57) **Abstract**

A retro-reflective sheet includes: a retro-reflective layer (20) including a plurality of retro-reflective elements (24) on one surface; and a back face layer (30) provided to face the surface of the retro-reflective layer on the retro-reflective elements side. A part of the retro-reflective layer and a part of the back face layer are bonded to each other via a coupling portion (34) colored in a color other than white. Voids (36) are formed between another part of the retro-reflective layer and another part of the back face layer. The color of the coupling portion is different from colors of layers provided on a side opposite to the back face layer side from the voids.

## Description

### Technical Field

The present invention relates to a retro-reflective sheet.

### Background Art

The retro-reflective sheet has a property of allowing light incident thereon to be reflected toward a light source. Due to such a property, the retro-reflective sheet is used for a purpose such as raising visibility of a target object (such as a printed object) irradiated with light during nighttime or in a dark place. The retro-reflective sheet is used for, for example, traffic signs, guide signs, vehicle license plates, advertisement signs, traffic lane separators, deliniators, and the like.

Patent Literature 1 described below discloses an example of such a retro-reflective sheet. The retro-reflective sheet includes a light transmissive top film having a plurality of retro-reflective elements on one surface and a base film provided to face the plurality of retro-reflective elements. In this retro-reflective sheet, the light transmissive top film and the base film are connected via a connecting wall extending in a thickness direction, so that a void is formed between the light transmissive top film and the base film. Light incident on the light transmissive top film from a surface of the retro-reflective sheet is retroreflected at an interface between the retro-reflective elements and the void. A viewer visually recognizes the light thus retroreflected at the interface between the retro-reflective elements and the void.

[Patent Literature 1] JPH07-218708 A

### Summary of Invention

In the conventional retro-reflective sheet as described above, when patterns, characters, and the like are displayed in various colors, a layer closer to the viewer than the void is, is colored. As described above, the viewer visually recognizes the light retroreflected at the interface between the retro-reflective elements and the void. Thus, when the layer closer to the viewer than the void is, is colored, the viewer visually recognizes light that has transmitted through the colored light. Thus, the viewer can visually recognize various color patterns, characters, and the like. In such a conventional retro-reflective sheet, the viewer visually recognizes the light of a color reflecting the color of the layer closer to the viewer than the void is, both day and night.

However, there has been a demand for a retro-reflective sheet that is viewed in different colors between daytime and nighttime. For example, there has been a demand for a retro-reflective sheet that is viewed to have a low-brightness color so as not to be too noticeable during the daytime, and is viewed with a pattern, characters, and the like displayed to stand out during the nighttime.

Thus, an object of the present invention is to provide a retro-reflective sheet that can be visually recognized in different colors between daytime and nighttime.

In order to solve the above problems, a retro-reflective sheet according to the present invention includes: a retro-reflective layer including a plurality of retro-reflective elements on one surface; and a back face layer provided to face the surface of the retro-reflective layer on the retro-reflective elements side. A part of the retro-reflective layer and a part of the back face layer are bonded to each other via a coupling portion colored in a color other than white. Voids are formed between another part of the retro-reflective layer and another part of the back face layer. The color of the coupling portion is different from colors of layers provided on a side opposite to the back face layer side from the voids.

In the above-described retro-reflective sheet, the coupling portion to be bonded to the retro-reflective layer is colored, and the viewer may be capable of visually recognizing the light with a color reflecting the color of the coupling portion in an environment with bright overall surroundings (such as daytime). Furthermore, in the above-described retro-reflective sheet, the voids are formed between the retro-reflective elements and the back face layer, and a gas such as air is confined in the voids. Due to the refractive index difference between this gas and the retro-reflective elements, the light incident from the retro-reflective layer side can be reflected to the retro-reflective layer side at an interface between the retro-reflective elements and the voids. In an environment with dark overall surroundings (such as nighttime), at least a part of the light emitted onto the retro-reflective sheet is retroreflected as described above, so that the retroreflected light is visually recognized by the viewer. The light retroreflected in this way is light transmitted through a layer provided on the side opposite to the back face layer side from the voids. The layer provided on the side opposite to the back face layer side from the voids is a retro-reflective layer or a surface protective layer provided on the retro-reflective layer as necessary. The viewer can visually recognize light of the color reflecting the color of the retro-reflective layer or the surface protective layer. In the above-described retro-reflective sheet, the colors of the retro-reflective layer and the surface protective layer and the color of the coupling portion are different from each other, whereby the retro-reflective sheet can be visually recognized as different colors between daytime and nighttime.

Note that different colors include the case where one of the colors is colorless. Thus, in the above-described retro-reflective sheet, the retro-reflective layer, the surface protective layer, and the like may be colorless and transparent. When all of the retro-reflective layer, the surface protective layer, and the like are colorless and transparent, the color of light retroreflected by the retro-reflective sheet and visually recognized by the viewer can be a color close to white. Therefore, at night, the retro-reflective sheet can be visually recognized by the viewer as a color close to white. Here, in the above-described retro-reflective sheet, the coupling portion is set to a color other than white, so that the viewer can visually recognize the retro-reflective sheet as a color other than white during the day. Thus, the above-described retro-reflective sheet can be visually recognized as a different color between daytime and nighttime.

A layer provided on the side opposite to the back face layer side from the voids is preferably colored.

The retro-reflective layer, the surface protective layer, and the like are colored, so that the degree of freedom in designing the retro-reflective sheet can be improved.

Furthermore, the color of the coupling portion is preferably lower in brightness than the colors of the layers provided on the side opposite to the back face layer side from the voids.

With the color of the coupling portion having lower brightness than the brightness of the colors of the retro-reflective layer, the surface protective layer, and the like in this way, when viewing the retro-reflective sheet during the day, light of a color in which the color of the coupling portion is reflected more clearly can be visually recognized.

Furthermore, the layers provided on the side opposite to the retro-reflective layer side from the voids may have light transmittance.

When no other layer is provided on the side opposite to the voids side from the back face layer, the back face layer may have light transmittance, whereas when another layer is provided on the side opposite to the voids side from the back face layer, the back face layer and the other layer may have light transmittance. Examples of the other layer provided on the side opposite to the voids side from the back face layer include an adhesive layer. That is, the back face layer, the adhesive layer, and the like may have light transmittance. In this way, when the back face layer, the adhesive layer, and the like have light transmittance, the above-described retro-reflective sheet can be used even when a light source is provided on the side of the back face layer opposite to the retro-reflective layer side. That is, the above-described retro-reflective sheet can be applied to equipment having a backlight.

Furthermore, the colors of the layers provided on the side opposite to the retro-reflective layer side from the back face layer are preferably higher in brightness than the color of the back face layer.

When the colors of the adhesive layer and the like are higher in brightness than the color of the back face layer, it is easy for the viewer to visually recognize the color of the light from the backlight as the color of light reflecting the color of the back face layer.

Preferably, in a plan view, the area of the coupling portion is 20% or more and 70% or less, and the area of the voids is 30% or more and 80% or less.

When the ratio of the area of the coupling portion and the area of the voids in a plan view is within the above ranges, the color of the coupling portion is noticeable when the retro-reflective sheet is viewed during the day, and a reduction in the retro-reflectivity can be suppressed.

Moreover, the coupling portion is preferably a part of the back face layer.

With the coupling portion serving as a part of the back face layer, the retro-reflective sheet can be easily manufactured.

As described above, according to the present invention, a retro-reflective sheet that can be visually recognized in different colors between daytime and nighttime can be provided.

### Brief Description of Drawings

FIG. 1 is a cross-sectional view schematically illustrating a part of a retro-reflective sheet in a thickness direction according to an embodiment of the present invention.
FIG. 2 is a plan view schematically illustrating a part of the retro-reflective sheet according to the embodiment of the present invention.

### Description of Embodiments

Hereinafter, a preferred embodiment of a retro-reflective sheet according to the present invention will be described in detail with reference to the drawings.

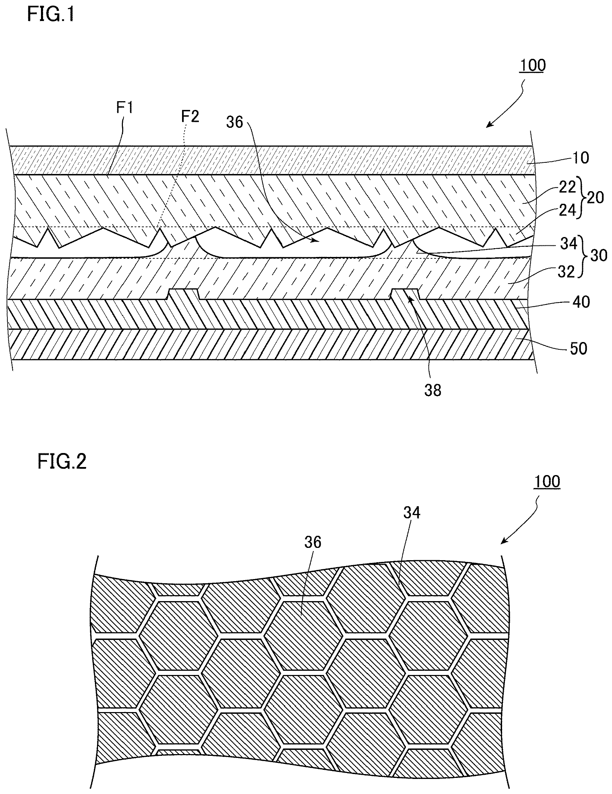

FIG. 1 is a cross-sectional view schematically illustrating a part of a retro-reflective sheet in a thickness direction according to an embodiment of the present invention. In FIG. 1 and the other drawings referred to in the following description, the size of each component is illustrated in an exaggerated manner or the like, and thus is not accurately illustrated for the sake of easy understanding. Furthermore, in each of FIG. 1 and the other drawings referred to in the following description, the same reference numerals are given to components having the same configuration, and repeated reference numerals are omitted.

As illustrated in FIG. 1, a retro-reflective sheet 100 according to the present embodiment includes a surface protective layer 10, a retro-reflective layer 20, a back face layer 30, an adhesive layer 40, and a release layer 50. Hereinafter, these components included in the retro-reflective sheet 100 will be described in more detail.

The surface protective layer 10 is a layer that protects a surface F1 of the retro-reflective layer 20 disposed on a viewer side when the retro-reflective sheet 100 is used, and is the layer on the outermost side of the retro-reflective sheet 100 when the retro-reflective sheet 100 is used. For the sake of providing the retro-reflective sheet 100 with excellent retro-reflectivity, the surface protective layer 10 according to the present embodiment is preferably a transparent resin layer and has the total light transmittance of 80% or higher for example.

Examples of the material forming the surface protective layer 10 include acrylic resin, alkyd resin, fluorine resin, vinyl chloride resin, polyester resin, urethane resin, and polycarbonate resin. One of these types of resin may be used alone, or a plurality of these types may be used in combination. For the sake of providing the surface protective layer 10 with the weatherability and the workability, acrylic resin, polyester resin, and vinyl chloride resin are preferably used. Furthermore, acrylic resin is preferably used for the sake of coating ability, dispersibility of a colorant when coloring, and the like. Note that various additives may be added to the surface protective layer 10 without largely compromising the transparency. The additives include an ultraviolet absorber, a light stabilizer, a heat stabilizer, a plasticizer, a crosslinking agent, an antioxidant, an antifungal agent, a colorant, and the like.

The retro-reflective layer 20 includes a plate-shaped holding body portion 22 and a plurality of retro-reflective elements 24. A first surface F1 of the holding body portion 22 is covered with the surface protective layer 10, and a second surface F2 of the holding body portion 22 is provided with a plurality of retro-reflective elements 24. The retro-reflective layer 20 according to the present embodiment has the holding body portion 22 and the plurality of retro-reflective elements 24 integrally formed, and the retro-reflective layer 20 formed as a single resin layer.

The plurality of retro-reflective elements 24 is not particularly limited as long as they have a reflective surface suitable for retroreflecting incident light. For example, preferably, the retro-reflective elements 24 with a polyhedral shape such as a triangular pyramid or what is known as a cube corner shape are arranged in a close-packed manner, so that excellent retro-reflectivity can be achieved.

For the sake of providing the retro-reflective sheet 100 with excellent retro-reflectivity, the retro-reflective layer 20 is a transparent resin layer. Examples of the material forming the retro-reflective layer 20 include acrylic resin, urethane resin, fluorine resin, polyester resin, vinyl chloride resin, polycarbonate resin, polyarylate resin, silicone resin, polyolefin resin, and ionomer resin. One of these types of resin may be used alone, or a plurality of these types may be used in combination. Furthermore, for the sake of improving the transparency and the weatherability of the retro-reflective layer 20, the retro-reflective layer 20 is preferably made of acrylic resin, urethane resin, fluorine resin, polycarbonate resin, or the like. Note that various additives may be added to the retro-reflective layer 20 without largely compromising the transparency. The additives include an ultraviolet absorber, a light stabilizer, a heat stabilizer, a plasticizer, a crosslinking agent, an antioxidant, an antifungal agent, a colorant, and the like.

The back face layer 30 is a layer provided to face the surface of the retro-reflective layer 20 on the retro-reflective elements 24 side. The back face layer 30 according to the present embodiment includes a plate-like support body portion 32 and a coupling portion 34 extending from the support body portion 32 toward the retro-reflective layer 20. In the back face layer 30 according to the present embodiment, the support body portion 32 and the coupling portion 34 are integrally formed, and the back face layer 30 is formed as a single resin layer. The coupling portion 34 has an end portion on the retro-reflective layer 20 side is bonded to a part of the retro-reflective layer 20. Thus, a part of the retro-reflective layer 20 and a part of the back face layer 30 are bonded to each other via the coupling portion 34. Furthermore, voids 36 are formed between other parts of the retro-reflective layer 20 and other parts of the back face layer 30.

FIG. 2 is a plan view schematically illustrating a part of the retro-reflective sheet 100 according to the present embodiment. Specifically, FIG. 2 is a diagram illustrating the retro-reflective sheet 100 as viewed from the viewer side. For the sake of easy understanding, FIG. 2 illustrates the retro-reflective sheet 100 viewed through the surface protective layer 10 and the retro-reflective layer 20, and the voids 36 are hatched.

As illustrated in FIG. 2, the coupling portion 34 is formed to have a honeycomb shape, and the voids 36 are surrounded by the coupling portion 34 to be formed as individual octagonal voids, as viewed in a plan view, that is, viewed in a direction orthogonal to the surface of the retro-reflective sheet 100. In this manner, the voids 36 are each independently surrounded by the coupling portion 34, whereby the voids 36 can be sealed. Thus, the coupling portion 34 can prevent water, foreign matter, or the like from entering the voids 36.

As illustrated in FIG. 1, a surface of the back face layer 30 according to the present embodiment opposite to the side of the retro-reflective layer 20 is provided with recesses 38 that are recessed toward the retro-reflective layer 20 and are positioned to overlap with the coupling portion 34 in the thickness direction of the retro-reflective sheet 100. The recesses 38 are portions formed when the back face layer 30 is pressed in a process of manufacturing the retro-reflective sheet 100 as described later.

Furthermore, the coupling portion 34 has a color that is other than white and is different from the color of a layer provided opposite to the side closer to the back face layer 30 than the voids 36 are. Specifically, the color of the coupling portion 34 according to the present embodiment is a color that is other than white and is different from the colors of the surface protective layer 10 and the retro-reflective layer 20. Note that the coupling portion 34 according to the present embodiment is integrated with the support body portion 32, and the color of the entirety of the back face layer 30 is different from the colors of the surface protective layer 10 and the retro-reflective layer 20. Such a back face layer 30 is made of resin containing a colorant.

Examples of the resin included in the material forming the back face layer 30 include acrylic resin, urethane resin, fluorine resin, polyester resin, vinyl chloride resin, polycarbonate resin, polyarylate resin, silicone resin, polyolefin resin, and ionomer resin. One of these types of resin may be used alone, or a plurality of these types may be used in combination. Furthermore, for the sake of improving the transparency, the weatherability, and the like of the back face layer 30, the back face layer 30 is preferably made of acrylic resin, urethane resin, fluorine resin, polycarbonate resin, or the like.

Examples of the colorant included in the material forming the back face layer 30 to be used may include inorganic pigments, organic pigments, organic dyes, and pearl pigments. In the back face layer 30, one of these colorants may be used alone, or two or more of these may be used in combination.

Examples of the inorganic pigments include titanium oxide, calcium carbonate, barium sulfate, zinc oxide, zinc sulfide, carbon black, cadmium red, molybdatered, ultramarine, cobalt blue, red iron oxide, chromium oxide, iron black, cadmium yellow, titanium yellow, nickel titanium yellow, chrome titanium yellow, yellow lead, yellow iron oxide, chrome orange, cadmium orange, gold powder, silver powder, copper powder, aluminum powder, and bronze powder. Examples of the organic pigments and the organic dyes include anthraquinone, phthalocyanine, quinacridone, isoindolinone, dioxazine, quinophthalone, quinoimine, perylene, perinone, azo, quinoline, methine, indigo, and naphtholimide organic compounds. Examples of the pearl pigments include titanium oxide-coated mica, bismuth oxide chloride, fish scale powders, and basic lead carbonate. As described above, the color of the coupling portion 34 is a color other than white. Thus, when a white colorant is used, a colorant of another color is used in combination.

Note that various additives may further be added to the back face layer 30. The additives include an ultraviolet absorber, a light stabilizer, a heat stabilizer, a plasticizer, a crosslinking agent, an antioxidant, and an antifungal agent.

The adhesive layer 40 is provided on the side of the back face layer 30 opposite to the side of the retro-reflective layer 20, and serves as a layer that is attached to an adherend when the retro-reflective sheet 100 is used.

The material forming the adhesive layer 40 can be appropriately selected from, for example, a pressure-sensitive adhesive, a heat-sensitive adhesive, a crosslinked adhesive, and the like. Examples of the pressure-sensitive adhesive include a polyacrylic acid ester pressure-sensitive adhesive obtained by copolymerizing acrylic acid ester such as butyl acrylate, 2-ethylhexyl acrylate, isooctyl acrylate, or nonyl acrylate with acrylic acid, vinyl acetate, or the like, a silicone-based resin pressure-sensitive adhesive, and a rubber-based pressure-sensitive adhesive. Examples of the heat-sensitive adhesive include acrylic resin, polyester resin, and epoxy resin. Acrylic resin or silicone resin is preferably used, so that the adhesive layer 40 can have excellent weatherability and adhesiveness.

The release layer 50 is a layer provided on the side of the adhesive layer 40 opposite to the side of the back face layer 30 side. By covering the adhesive layer 40 with the release layer 50 before the retro-reflective sheet 100 is used, dust or the like is prevented from adhering to the adhesive layer 40 and the adhesive layer 40 is prevented from adhering to an unintended place. On the other hand, when the retro-reflective sheet 100 is used, the releaselayer 50 is released from the adhesive layer 40.

Such a release layer 50 is made of, for example, a polyester film, a polypropylene film, or the like, but is not particularly limited thereto.

The retro-reflective sheet 100 described above includes the retro-reflective layer 20 and the back face layer 30 provided to face the surface of the retro-reflective layer 20 on the retro-reflective elements 24 side. Furthermore, a part of the retro-reflective layer 20 and a part of the back face layer 30 are bonded to each other via a colored coupling portion 34, and the voids 36 are formed between other parts of the retro-reflective layer 20 and other parts of the back face layer 30. Moreover, the coupling portion 34 has a color that is other than white and is different from the color of a layer provided on a side opposite to the back face layer 30 side from the voids 36.

In the retro-reflective sheet 100 according to the present embodiment as described above, the coupling portion 34 to be bonded to the retro-reflective layer 20 is colored, and the viewer may be capable of visually recognizing the light with a color reflecting the color of the coupling portion 34 in an environment with bright overall surroundings (such as daytime). Furthermore, in the retro-reflective sheet 100 according to the present embodiment, the voids 36 are formed between the retro-reflective elements 24 and the back face layer 30, and a gas such as air is confined in the voids 36. Due to the refractive index difference between this gas and the retro-reflective elements 24, the light incident from the retro-reflective layer 20 side can be reflected to the retro-reflective layer 20 side at an interface between the retro-reflective elements 24 and the voids 36. In an environment with dark overall surroundings (such as nighttime), at least a part of the light emitted onto the retro-reflective sheet 100 is retroreflected as described above, so that the retroreflected light is visually recognized by the viewer. The light thus retroreflected is light that has passed through the layer provided on the side opposite to the back face layer 30 side from the voids 36. Thus, the viewer may be capable of visually recognizing the color reflecting the color of the layer provided on the side opposite to the back face layer 30 side from the voids 36. That is, in the retro-reflective sheet 100 according to the present embodiment, the viewer can visually recognize the light of the color reflecting the colors of the retro-reflective layer 20 and the surface protective layer 10. In the retro-reflective sheet 100 according to the present embodiment, the color of the coupling portion 34 and the color of the layer provided on the side opposite to the back face layer 30 side from the voids 36 are different from each other, whereby the retro-reflective sheet 100 can be visually recognized as different colors between daytime and nighttime.

Note that different colors include the case where one of the colors is colorless. Therefore, a layer provided on the side opposite to the back face layer 30 side from the voids 36 may be colorless and transparent. That is, in the retro-reflective sheet 100 according to the present embodiment, the retro-reflective layer 20 and the surface protective layer 10 may be colorless and transparent. When all the layers provided on the side opposite to the back face layer 30 side from the voids 36 are colorless and transparent, the color of light retroreflected by the retro-reflective sheet 100 and visually recognized by the viewer can be a color close to white. Therefore, at night, the retro-reflective sheet 100 can be visually recognized by the viewer as a color close to white. Here, in the retro-reflective sheet 100 according to the present embodiment, the coupling portion 34 is set to a color other than white, so that the viewer can visually recognize the retro-reflective sheet 100 as a color other than white during the day. Thus, the retro-reflective sheet 100 can be visually recognized as a different color between daytime and nighttime.

Furthermore, when a layer provided on the side opposite to the back face layer 30 side from the voids 36 is colorless and transparent, the retro-reflectivity of the retro-reflective sheet 100 can be improved.

However, a layer provided on the side opposite to the back face layer 30 side from the voids 36 is preferably colored. That is, in the retro-reflective sheet 100 according to the present embodiment, at least one of the retro-reflective layer 20 and the surface protective layer 10 is preferably colored. Thus, a layer provided on the side opposite to the back face layer 30 side from the voids 36 is colored, so that the degree of freedom in designing the retro-reflective sheet 100 can be improved. For example, when the retro-reflective layer 20 or the surface protective layer 10 is yellow and the coupling portion 34 is blue, the retro-reflective sheet 100 may appear green during the day and the retro-reflective sheet 100 may appear yellow at night. Therefore, the retro-reflective sheet 100 can be a sign or a signboard that can be alerted at night while blending in with the surrounding environment during the day.

Furthermore, the color of the coupling portion 34 is preferably lower in brightness than the colors of the layers provided on the side opposite to the back face layer 30 side from the voids 36. That is, in the retro-reflective sheet 100 according to the present embodiment, the color of the coupling portion 34 is preferably lower in brightness than the color of the retro-reflective layer 20 and the color of the surface protective layer 10. With the color of the coupling portion 34 having lower brightness in this way, when viewing the retro-reflective sheet 100 during the day, light of a color in which the color of the coupling portion 34 is reflected more clearly can be visually recognized.

Furthermore, for the sake of efficient retroreflection at the retro-reflective elements 24, the refractive index of the material forming the retro-reflective elements 24 is preferably larger than the refractive index of the material forming the coupling portion 34.

Furthermore, the layers provided on the side opposite to the retro-reflective layer 20 side from the voids 36 may have light transmittance. That is, in the retro-reflective sheet 100 according to the present embodiment, the back face layer 30 and the adhesive layer 40 may have light transmittance. In this way, when the layers provided on the side opposite to the retro-reflective layer 20 side from the voids 36 have light transmittance, the retro-reflective sheet 100 can be used even when a light source is provided on the side of the back face layer 30 opposite to the retro-reflective layer 20 side. That is, the retro-reflective sheet 100 can be applied to equipment having a backlight. Since the release layer 50 is released off when the retro-reflective sheet 100 is used, the color of the release layer 50 and whether it has light transmittance are not particularly limited.

When the layers provided on the side opposite to the retro-reflective layer 20 side from the voids 36 have light transmittance, the colors of the layers provided on the side of the back face layer 30 opposite to the retro-reflective layer 20 side are preferably higher in brightness than the color of the back face layer 30. When other layers are provided on the side opposite to the retro-reflective layer 20 side from the back face layer 30, it is easy for the viewer to visually recognize the color of the light from the backlight as the color of light reflecting the color of the back face layer 30 because the colors of the other layers are higher in brightness than the color of the back face layer 30.

The retro-reflective sheet 100 described above can be manufactured as exemplified below. First, a sheet to be the retro-reflective layer 20 and a sheet to be the back face layer 30 are prepared, and these sheets are overlapped so that the retro-reflective elements 24 and the back face layer 30 face each other to form the coupling portion 34 and the voids 36. Then, the retro-reflective layer 20 and the back face layer 30 are laminated. At this time, the pressure is applied while applying heat from the back face layer 30 side to the retro-reflective layer 20 side. As a result, recesses 38 are formed in the back face layer 30, and a coupling portion 34 is formed on the surface of the back face layer 30 opposite to the recesses 38. In the present embodiment, the pressing of the back face layer 30 as described above is performed by using a honeycomb-shaped pressing member, whereby the coupling portion 34 having a honeycomb shape is formed as illustrated in FIG. 2. After the retro-reflective layer 20 and the back face layer 30 are bonded in this manner, the adhesive layer 40 and the release layer 50 are stacked. The surface protective layer 10 may be formed before the retro-reflective layer 20 and the back face layer 30 are overlapped, or may be formed after the retro-reflective layer 20 and the back face layer 30 are overlapped. Moreover, the method for forming each layer is not specifically limited.

By performing the pressing from the back face layer 30 side to thermocompression-bond the retro-reflective layer 20 and the back face layer 30 to each other as described above, deformation of the retro-reflective layer 20 is less likely to occur, meaning that a negative impact on the retro-reflectivity of the retro-reflective sheet 100 can be reduced.

Although a preferred embodiment of the present invention is described above as an example, the present invention is not limited to this.

For example, in the above-described embodiment, an example is described in which the surface protective layer 10 is provided. However, the surface protective layer 10 is not an essential component.

Furthermore, in the above-described embodiment, an example is described in which the adhesive layer 40 is provided. However, the adhesive layer 40 is not an essential component. For example, when the back face layer 30 is made of an adhesive, the retro-reflective sheet can be attached to an object even if the adhesive layer 40 is not provided. Thus, the retro-reflective sheet can have a simple layer structure, and the production cost of the retro-reflective sheet can be prevented from being high.

Furthermore, the retro-reflective sheet according to the present invention may be provided with layers other than the layers illustrated in the above-described embodiment. For example, a colored layer or a printed layer may be provided between the surface protective layer 10 and the retro-reflective layer 20.

In the above-described embodiment, an example is described in which the coupling portion 34 is formed to have a honeycomb shape in a plan view. Specifically, in the configuration described as an example, the voids 36 surrounded by the coupling portion 34 have an octagonal shape in a plan view. However, the present invention is not limited to this configuration, and the shape of the voids 36 surrounded by the coupling portion 34 in a plan view may be any shape such as a circle, an ellipse, or a polygon other than an octagon.

In the above-described embodiment, an example is described in which the coupling portion 34 is continuously formed so that the plurality of voids 36 is formed independently of each other. However, the coupling portion 34 may be formed intermittently. Furthermore, in the voids 36 that are independently formed as in the above-described embodiment, other coupling portions may be intermittently formed.

Furthermore, in the above-described embodiment, as illustrated in FIG. 2, an example is described in which the area of the coupling portion 34 is smaller than the area of the voids 36 in a plan view. However, the area of the coupling portion 34 may be larger than the area of the voids 36 in a plan view. The ratio of the area of the coupling portion 34 and the area of the voids 36 in a plan view of the retro-reflective sheet 100 is as follows, for example. When the total area of the coupling portion 34 and the voids 36 is 100%, the area of the coupling portion 34 is preferably 20% or more and 70% or less, whereas the area of the voids 36 is preferably 30% or more and 80% or less. More preferably, the area of the coupling portion 34 is 30% or more and 50% or less, and the area of the voids 36 is 50% or more and 70% or less. By increasing the area of the coupling portion 34 to some extent, the color of the coupling portion 34 becomes more noticeable when the retro-reflective sheet 100 is viewed during the day. However, the coupling portion 34 tends not to contribute to retroreflection. For this reason, when the ratio of the area of the coupling portion 34 and the area of the voids 36 in a plan view of the retro-reflective sheet 100 is within the above ranges, the color of the coupling portion 34 is more noticeable when the retro-reflective sheet 100 is viewed during the day, and a reduction in the retro-reflectivity of the retro-reflective sheet 100 can be suppressed. By suppressing the reduction in the retro-reflectivity of the retro-reflective sheet 100, deterioration of the appearance of the retro-reflective sheet 100 at night can be suppressed.

In the above-described embodiment, the example is described in which the support body portion 32 and the coupling portion 34 are integrated. However, the support body portion 32 and the coupling portion 34 may be configured separately. In this case, the support body portion 32 and the coupling portion 34 may have different colors. However, it is preferable that the support body portion 32 and the coupling portion 34 are integrated. With the coupling portion 34 serving as a part of the back face layer 30, the retro-reflective sheet 100 can be easily manufactured as in the above-described embodiment. Furthermore, even when the support body portion 32 and the coupling portion 34 are integrated, the support body portion 32 and the coupling portion 34 may have different colors. For example, when the back face layer 30 is made of a material that changes its color when heat or pressure is applied, the support body portion 32 and the coupling portion 34 can have different colors because heat or pressure is applied to the portion that becomes the coupling portion 34 in the process of manufacturing the retro-reflective sheet 100 as described above.

As described above, according to the present invention, a retro-reflective sheet that can be recognized as different colors between daytime and nighttime is provided, and can be used in fields such as guide signs and advertisement signs.

### Reference Signs List

- 10: surface protective layer
- 20: retro-reflective layer
- 24: retro-reflective elements
- 30: back face layer
- 34: coupling portion
- 36: void
- 40: adhesive layer
- 50: release layer
- 100: retro-reflective sheet

## Claims

1. A retro-reflective sheet comprising:
a retro-reflective layer including a plurality of retro-reflective elements on one surface; and
a back face layer provided to face the surface of the retro-reflective layer on the retro-reflective elements side, wherein
a part of the retro-reflective layer and a part of the back face layer are bonded to each other via a coupling portion colored in a color other than white,
voids are formed between another part of the retro-reflective layer and another part of the back face layer, and
the color of the coupling portion is different from colors of layers provided on a side opposite to a back face layer side from the voids.

2. The retro-reflective sheet according to claim 1, wherein
a layer provided on the side opposite to the back face layer side from the voids is colored.

3. The retro-reflective sheet according to claim 1 or 2, wherein
the color of the coupling portion is lower in brightness than the colors of the layers provided on the side opposite to the back face layer side from the voids.

4. The retro-reflective sheet according to any one of claims 1 to 3, wherein
a layer provided on a side opposite to the retro-reflective layer side from the voids has light transmittance.

5. The retro-reflective sheet according to claim 4, wherein
a color of a layer provided on a side opposite to the retro-reflective layer from the back face layer is higher in brightness than a color of the back face layer.

6. The retro-reflective sheet according to any one of claims 1 to 5, wherein,
in a plan view, an area of the coupling portion is 20% or more and 70% or less, and an area of the voids is 30% or more and 80% or less.

7. The retro-reflective sheet according to any one of claims 1 to 6, wherein
the coupling portion is a part of the back face layer.
